# EUROPEAN PATENT APPLICATION

(11) **EP 3 486 281 A1**
(43) Date of publication of application: **22.05.2019**
(21) Application number: 18207153.0
(22) Date of filing: 20.11.2018
(51) Int. Cl.: C08L 9/06

(54) **ELECTRICALLY CONDUCTIVE RESIN COMPOSITION AND METHOD OF PREPARING THE SAME**

(30) Priority: 21.11.2017 KR 20170155973
(71) Applicant: Korea Kumho Petrochemical Co., Ltd., Seoul 04542 (KR)
(72) Inventor: HWANG, Ho Soo, 34071 Daejeon (KR); LEE, Wan Sung, 34048 Daejeon (KR); KIM, Hyung Min, 06630 Seoul (KR); SONG, Yu Hyun, 34049 Daejeon (KR); KIM, Dong Hwan, 34119 Daejeon (KR)
(74) Representative: Zardi, Marco

(57) **Abstract**

Provided are a conductive resin composition which includes 10 to 40 wt% of a first copolymer having an average particle size of 1 to 5 µm; 30 to 60 wt% of a second copolymer having an average particle size of 0.1 to 1 µm; 10 to 20 wt% of a third copolymer prepared by copolymerizing styrene and butadiene in a weight ratio of 60 to 80 : 20 to 40; 1 to 10 wt% of a conductive filler; and 5 to 10 wt% of a rubber component, and a method of preparing the same.

## Description

### CROSS-REFERENCE TO RELATED APPLICATION

This application claims priority to and the benefit of Korean Patent Application No 10-2017-0155973, filed on NOV 21, 2017, the disclosure of which is incorporated herein by reference in its entirety.

### BACKGROUND

### 1. Field of the Invention

The present invention relates to a conductive resin composition and a method of preparing the same, and more particularly, to a conductive resin composition which can be molded into a product in which a sloughing phenomenon caused by desorption of a conductive filler is minimized while maintaining mechanical properties, and a method of preparing the same.

### 2. Discussion of Related Art

A thermoplastic resin refers to a plastic which softens when heated and thus exhibits plasticity, and solidifies when cooled. Such a thermoplastic resin exhibits excellent processability and moldability, and thus has been widely applied to various household goods, office automation equipment, electric and electronic products, automobile parts or the like.

In addition, attempts have been continuously made to use a thermoplastic resin as a high-value-added material by providing specific properties to a thermoplastic resin depending on the type and characteristics of products using such a thermoplastic resin.

In particular, when a thermoplastic resin is applied to the field in which friction occurs between resin products or between a resin product and other materials, a product is damaged and contaminated due to an electrification phenomenon, and thus there is a need to impart electrical conductivity (hereinafter, referred to as "conductivity") to a thermoplastic resin.

In this way, for imparting conductivity to a thermoplastic resin, a conductive filler such as carbon nanotubes, carbon black, graphite, carbon fibers, metal powder, metal-coated inorganic powder, metallic fibers, or the like has been conventionally used.

For example, US Patent No. 4478903, Korean Registered Patent No. 10-0330200, and the like disclose a conductive composite in which a thermoplastic resin such as polystyrene or ABS are mixed with carbon black. However, in this case, an excessive amount of carbon black needs to be used to provide a desired level of conductivity, and thus inherent mechanical properties, particularly, impact resistance of a thermoplastic resin may be significantly degraded.

In addition, when the conductive composite is molded in a sheet type, a skin layer has about 10 to 20% higher thickness than that of a core layer. Therefore, when the entire thickness of the sheet is changed or the thickness of the skin layer is reduced, a conductivity variation may occur throughout the composite, and the excessive amount of carbon black causes unnecessary particles to remain on the sheet surface after molding of the composite, and thus surface characteristics of a product may be degraded.

Additionally, Korean Registered Patent No. 10-1204030 discloses a resin composition for a semiconductor chip tray, which includes 50 to 65 wt% of polyphenylene ether, 10 to 20 wt% of impact-resistant polystyrene, 1 to 3 wt% of carbon nanotubes, and the like. The resin composition essentially has thermoplasticity and thus needs to be freely molded according to the form of a final product. However, carbon nanotubes, which are dispersed in the resin composition, are not uniformly dispersed in a bent portion requiring higher elongation compared to a plane portion upon molding of a product, and thus conductivity at the bent portion is significantly degraded. For this reason, it is difficult to apply the resin composition to products, parts, and the like, which need to be elaborately shaped, and a desired level of impact resistance is not imparted to a thin sheet due to high elongation.

### SUMMARY OF THE INVENTION

The present invention is designed to solve the problems of the prior art, and it is an object of the present invention to provide a conductive resin composition which can be molded into a product in which a sloughing phenomenon caused by desorption of a conductive filler is minimized while maintaining mechanical properties, and a method of preparing the same.

According to an aspect of the present invention, there is provided a conductive resin composition which includes 10 to 40 wt% of a first copolymer having an average particle size of 1 to 5 µm; 30 to 60 wt% of a second copolymer having an average particle size of 0.1 to 1 µm; 10 to 20 wt% of a third copolymer prepared by copolymerizing styrene and butadiene in a weight ratio of 60 to 80 : 20 to 40; 1 to 10 wt% of a conductive filler; and 5 to 10 wt% of a rubber component.

According to an embodiment, the first copolymer and the second copolymer may be a styrene-butadiene copolymer.

According to an embodiment, the conductive filler may be selected from the group consisting of carbon nanotubes, fullerene, graphene, graphite, carbon fiber, carbon black, and a mixture of two or more thereof.

According to an embodiment, the rubber component may be styrene-ethylene-butadiene-styrene rubber.

According to an embodiment, the conductive resin composition may further include a metal salt and stearamide.

According to an embodiment, the metal salt may be selected from the group consisting of calcium stearate, barium stearate, lead stearate, magnesium stearate, zinc stearate, and a mixture of two or more thereof.

According to an embodiment, the metal salt and the stearamide each may be included in an amount of 1 to 5 wt% with respect to the total weight of the conductive resin composition.

According to an embodiment, the conductive resin composition may further include a silicone oil.

According to an embodiment, the silicone oil may be selected from the group consisting of dimethyl silicone oil, methyl hydrogen silicone oil, ester-modified silicone oil, hydroxy silicone oil, carbinol-modified silicone oil, vinyl silicone oil, silicone acrylate, and a mixture of two or more thereof.

According to an embodiment, the silicone oil may be included in an amount of 0.5 to 5 wt% with respect to the total weight of the conductive resin composition.

According to another aspect of the present invention, there is provided a molded product made of the conductive resin composition.

According to an embodiment, the molded product may have an elongation rate of 60% or more.

According to still another aspect of the present invention, there is provided a method of preparing a conductive resin composition, which includes (a) mixing a first copolymer having an average particle size of 1 to 5 µm and a conductive filler to prepare a masterbatch; and (b) mixing the masterbatch with a second copolymer having an average particle size of 0.1 to 1 µm, a third copolymer prepared by copolymerizing styrene and butadiene in a weight ratio of 60 to 80 : 20 to 40, and a rubber component.

According to an embodiment, a metal salt and a silicone oil may be further mixed in the step (a).

According to an embodiment, stearamide may be further mixed in the step (b).

### DETAILED DESCRIPTION OF EXEMPLARY EMBODIMENTS

Hereinafter, exemplary embodiments of the present invention will be described in detail. However, it should be understood that the present invention can be implemented in various forms, and that it is not intended to limit the present invention to the exemplary embodiments.

Throughout the specification, a certain part being "connected" to one other part means that the certain part is "directly connected" to the other part or that the certain part is "indirectly connected" to the other part through another member interposed between the two parts. Also, a certain part "including" a certain element signifies that the certain part may further include, instead of excluding, another element unless particularly indicated otherwise.

### Conductive resin composition

According to an aspect of the present invention, there is provided a conductive resin composition which includes 10 to 40 wt% of a first copolymer having an average particle size of 1 to 5 µm; 30 to 60 wt% of a second copolymer having an average particle size of 0.1 to 1 µm; 10 to 20 wt% of a third copolymer prepared by copolymerizing styrene and butadiene in a weight ratio of 60 to 80 : 20 to 40; 1 to 10 wt% of a conductive filler; and 5 to 10 wt% of a rubber component. Here, the "% by weight (wt%)" is based on the total weight of the conductive resin composition.

The first copolymer and the second copolymer may be a styrene-butadiene copolymer. The term "styrene-butadiene copolymer" used herein refers to common high impact polystyrene (HIPS) and may be interpreted as a rubber-modified styrene-based copolymer or rubber-modified polystyrene.

The first copolymer may have an average particle size of 1 to 5 µm and include butadiene, which is a rubber component, in an amount of 7.5 to 9 wt% with respect to the total weight of the first copolymer. The first copolymer has a relatively large average particle size, may be used in combination with an excessive amount of mineral oil (about 3 to 5 wt%) as necessary, and thus may exhibit high fluidity.

The first copolymer may be included in an amount of 10 to 40 wt%, preferably, 20 to 40 wt% with respect to the total weight of the conductive resin composition. When a content of the first copolymer is less than 10 wt%, fluidity is lowered, and thus moldability may be degraded. On the other hand, when a content of the first copolymer is greater than 40 wt%, mechanical properties of a molded product manufactured from the conductive resin composition may be degraded.

The conductive resin composition may further include a second copolymer having an average particle size of 0.1 to 1 µm. The second copolymer may include butadiene, which is a rubber component, in an amount of 7.5 to 8.5 wt% with respect to the total weight of the second copolymer. The second copolymer has a relatively small average particle size compared to the first copolymer, may be used in combination with a small amount of mineral oil (about 0.5 to 3 wt%) as necessary, and thus may exhibit high glossiness and high impact characteristics.

The second copolymer may be included in an amount of 30 to 60 wt%, preferably, 35 to 50 wt% with respect to the total weight of the conductive resin composition. When a content of the second copolymer is less than 30 wt%, surface characteristics and mechanical properties of a molded product may be degraded. On the other hand, when a content of the second copolymer is greater than 60 wt%, fluidity of the composition is lowered, and thus moldability may be degraded.

The conductive resin composition may further include 10 to 20 wt% of a third copolymer prepared by copolymerizing styrene and butadiene in a weight ratio of 60 to 80 : 20 to 40, preferably, 65 to 75 : 25 to 35. The third copolymer includes a relatively excessive amount of butadiene, which is a rubber component, compared to the first and second copolymers, and thus mechanical properties, particularly, impact resistance of a molded product manufactured from the conductive resin composition including the third copolymer may be significantly enhanced. Also, the third copolymer has excellent transparency and glossiness, and thus smoothness of the surface of the molded product may be improved. In addition to the first and second copolymers, the third copolymer has excellent compatibility with a rubber component to be described below and thus may be smoothly mixed and extruded.

The third copolymer may be included in an amount of 10 to 20 wt% with respect to the total weight of the conductive resin composition. When a content of the third copolymer is less than 10 wt%, surface characteristics and mechanical properties of a molded product may be degraded. On the other hand, when a content of the third copolymer is greater than 20 wt%, fluidity of the composition is lowered, and thus moldability may be degraded.

The conductive resin composition may include a conductive filler in an amount of 1 to 10 wt%, preferably, 1 to 5 wt%. When a content of the conductive filler is less than 1 wt%, an effect of imparting conductivity to a resin and a product may be insignificant. On the other hand, when a content of the conductive filler is greater than 10 wt%, the contents of the first to third copolymers and a rubber component are relatively decreased or a balance in the contents is hindered, and thus moldability of a resin composition and mechanical properties of a molded product may be degraded, and dispersibility of the conductive filler may be degraded due to agglomeration of the conductive filler.

The conductive filler may be selected from the group consisting of carbon nanotubes, fullerene, graphene, graphite, carbon fiber, carbon black, and a mixture of two or more thereof, and preferably is carbon nanotubes in consideration of ease in mixing with the copolymers, but the present invention is not limited thereto.

The carbon nanotube is a material for imparting conductivity to a copolymer resin with poor conductivity, and surface resistance of a product manufactured by molding a resin composition including the carbon nanotubes may be decreased to enhance conductivity and antistatic properties corresponding thereto.

Specifically, when the carbon nanotubes are mixed with a copolymer resin, individual carbon nanotubes may be dispersed in the copolymer resin and mutually connected to form a continuous three-dimensional network structure, and accordingly, excellent conductivity may be exhibited.

As a method of synthesizing the carbon nanotubes, an arc-discharge method, a pyrolysis method, a laser vaporization method, a plasma chemical vapor deposition method, a thermal chemical vapor deposition method, or the like may be used, but all carbon nanotubes prepared without limitation in a synthesizing method may be used.

In addition, the carbon nanotubes may be selected from the group consisting of single-walled carbon nanotubes, double-walled carbon nanotubes, multi-walled carbon nanotubes, hollow-tube-type carbon nanofibers (cup-stacked carbon nanofibers) in which a plurality of truncated conical graphene are laminated, and a mixture of two or more thereof depending on the number of walls. The carbon nanotubes preferably are multi-walled carbon nanotubes having excellent ease of manufacture and economic feasibility, but the present invention is not limited thereto.

The carbon nanotubes may have an average outer diameter of 8 to 50 nm and an average inner diameter of 40% or more, preferably, 40 to 90% of the average outer diameter. The outer diameter means a diameter of a cross section of carbon nanotubes including a graphite layer constituting the wall of carbon nanotubes, and the inner diameter means a diameter of a cross section of a hollow cavity excluding the graphite layer.

When the single-strand carbon nanotubes have an average outer diameter of less than 8 nm or greater than 50 nm, an average bundle diameter of a carbon nanotube agglomerate that is formed by agglomeration thereof is not adjusted to a range to be described below, and thus it is preferable that carbon nanotubes having an outer diameter within the above range be used. The term "bundle" used herein refers to a bundle or rope form in which a plurality of carbon nanotubes are arranged in parallel or are mutually entangled. In contrast, a state in which a plurality of carbon nanotubes are present without formation of a certain shape is referred to as "non-bundle-type".

In addition, as a carbon content of carbon nanotubes is higher, they have fewer impurities such as catalysts, and thus excellent conductivity may be realized. Therefore, the carbon purity of the carbon nanotubes may be 95% or more, preferably 95 to 98%, and more preferably 95 to 97%.

When the carbon purity of the carbon nanotubes is less than 95%, a structural defect of the carbon nanotubes is caused, and thus the crystallinity thereof may be degraded and the carbon nanotubes may be easily cut or broken due to an external stimulus.

Meanwhile, the carbon nanotube agglomerate that is formed by agglomerating the single-strand carbon nanotubes in a bundle form as described above may have an average bundle diameter of 1 to 10 µm, preferably 1 to 5 µm, and more preferably 2 to 4 µm and an average bundle length of 10 to 100 µm, preferably 20 to 60 µm, and more preferably 25 to 55 µm.

When the carbon nanotube agglomerate has an average bundle diameter of less than 1 µm or an average bundle length of greater than 100 µm, dispersibility is degraded, and thus conductivity of the conductive resin composition may not be uniform throughout the composition. On the other hand, when the carbon nanotube agglomerate has an average bundle diameter of greater than 10 µm or an average bundle length of less than 10 µm, the network structure becomes unstable, and thus conductivity may be degraded.

The conductive resin composition may include 5 to 10 wt% of a rubber component. The rubber component may supplement the hardness of a resin including the first to third copolymers to enhance the elongation rate and impact strength of the conductive resin composition and a molded product manufactured therefrom. When a content of the rubber component is less than 5 wt%, impact resistance may be degraded, and when a content of the rubber component is greater than 10 wt%, a sloughing phenomenon may occur or moldability may be degraded.

The rubber component may be selected from the group consisting of butadiene rubber, isoprene rubber, styrene-butadiene-styrene rubber, styrene-isoprene-styrene rubber, acrylonitrile-butadiene rubber, styrene-butadiene rubber, ethylene-propylene rubber, styrene-ethylene-butadiene-styrene rubber, and a mixture of two or more thereof, and preferably is styrene-ethylene-butadiene-styrene rubber, but the present invention is not limited thereto.

Although the first to third copolymers and the rubber component of the conductive resin composition have mutually different properties and functions as described above, when they are mutually organically combined and mixed, the moldability and mechanical properties of the conductive resin composition may be enhanced at the same time, and the dispersion of the conductive filler is also not hindered upon molding of the composition. Therefore, a predetermined level of conductivity may be realized throughout a final product regardless of the form and structure of the product, and thus reliability and reproducibility of the product may be enhanced. Also, a sloughing phenomenon in which unnecessary dust remains on the surface of the final product due to arbitrary desorption of the conductive filler may be reduced.

The conductive resin composition may further include 1 to 5 wt% of a metal salt and 1 to 5 wt% of stearamide. The metal salt may smooth the surface of a molded product manufactured from the conductive resin composition to minimize the sloughing phenomenon. When a content of the metal salt is less than 1 wt%, unnecessary protrusions are generated on the surface of the molded product thus manufactured, and thus surface characteristics may be degraded, and when a content of the metal salt is greater than 5 wt%, conductivity may be degraded.

The metal salt may be selected from the group consisting of calcium stearate, barium stearate, lead stearate, magnesium stearate, zinc stearate, and a mixture of two or more thereof, and preferably is zinc stearate, but the present invention is not limited thereto.

In addition, the stearamide may enhance fluidity of the conductive resin composition to minimize a conductivity variation caused by elongation upon molding of the composition. When a content of the stearamide is less than 1 wt%, a conductivity variation may be increased throughout the final product, and when a content of the stearamide is greater than 5 wt%, fluidity of the resin composition is excessively increased, and thus mechanical properties may be degraded. The stearamide may be used alone or in combination with oleamide or erucamide.

Meanwhile, the conductive resin composition may further include 0.5 to 5 wt% of a silicone oil. The silicone oil may smooth the surface of a molded product manufactured from the conductive resin composition to minimize the sloughing phenomenon like the metal salt. When a content of the silicone oil is less than 0.5 wt%, unnecessary protrusions are generated on the surface of the molded product thus manufactured, and thus surface characteristics may be degraded, and when a content of the silicone oil is greater than 5 wt%, conductivity may be degraded.

The silicone oil may be selected from the group consisting of dimethyl silicone oil, methyl hydrogen silicone oil, ester-modified silicone oil, hydroxy silicone oil, carbinol-modified silicone oil, vinyl silicone oil, silicone acrylate, and a mixture of two or more thereof, and preferably is dimethyl silicone oil, but the present invention is not limited thereto.

### Molded product

According to another aspect of the present invention, there is provided a molded product made of the conductive resin composition. The molded product may have an elongation rate of 60% or more. The term "elongation rate" used herein refers to a value obtained by placing specimens fractured in a tensile test face to face, determining a strain between gauge marks, and then expressing the strain as a percentage (%). When the molded product has an elongation rate of less than 60%, it is difficult to form the molded product with a complicated form and structure.

The molded product may have a predetermined level of conductivity because it is manufactured from the conductive resin composition. For example, the molded product may have a surface resistance of 5.0 to 6.0 Ω/sq.

In addition, the molded product may be in a sheet form, a film form, or other similar forms, and has a predetermined level of conductivity and antistatic properties corresponding thereto so that it may be applied to an electronic component transfer module, a semiconductor transfer tray, a carrier tape, a pipe, or the like.

### Method of preparing conductive resin composition

According to still another aspect of the present invention, there is provided a method of preparing a conductive resin composition, which includes (a) mixing a first copolymer having an average particle size of 1 to 5 µm and a conductive filler to prepare a masterbatch; and (b) mixing the masterbatch with a second copolymer having an average particle size of 0.1 to 1 µm, a third copolymer prepared by copolymerizing styrene and butadiene in a weight ratio of 60 to 80 : 20 to 40, and a rubber component.

The descriptions of effects, contents, and usable types of the first to third copolymers, the conductive filler, and the rubber component are the same as those provided above.

That is, the conductive resin composition may be prepared in the above-described composition ratio by firstly mixing a polymer component and a conductive filler to prepare a masterbatch and further mixing other polymer components and a rubber component therewith. In this case, the masterbatch may be prepared in an amount of 10 to 50 wt%, preferably, 20 to 40 wt% with respect to the total weight of the conductive resin composition.

The conductive resin composition may basically consist of a polymer resin having a predetermined level of mechanical properties and moldability and a conductive filler (e.g., metals, other inorganic materials, and the like) which is capable of imparting conductivity to the polymer resin. In order to prepare such a conductive resin composition, a process for mixing a polymer resin and a conductive filler is involved.

Conventionally, a technique for increasing the content of the conductive filler has been proposed to enhance conductivity of a resin composition. However, when the content of the same type of conductive filler, particularly, carbon nanotubes increases to a predetermined level or more, processability, workability, and the like in addition to mechanical properties of a resin itself may be degraded. For solving this problem, attempts have been made to increase the total content of the conductive filler in the conductive resin composition by using carbon nanotubes in combination with carbon black, which exhibits an insignificant effect of providing conductivity but has excellent processability and workability compared to carbon nanotubes.

This method is common in that the resin and the conductive filler are mixed through a single process except that the type and content of the conductive filler are adjusted differently.

Regarding this, in the step (a), a first copolymer having an average particle size of 1 to 5 µm and a conductive filler may be mixed and extruded to prepare a masterbatch including a conductive filler at a desired concentration.

The term "masterbatch" used herein refers to a material prepared by dispersing a filler, an additive, and the like at high concentration in advance upon preparation of a resin composition. By preparing the masterbatch, dispersibility of the conductive filler in the resin composition may be enhanced, and accordingly, conductivity may be uniformly provided throughout the conductive resin composition.

In this case, the masterbatch may be prepared in a sphere shape, a pellet shape, or the like, but may be prepared without limitation in a shape thereof as long as a masterbatch can be mixed with a second copolymer, a third copolymer, and a rubber component in the subsequent step to enhance dispersibility of the conductive filler.

Meanwhile, the step (a) may be performed at 180 to 300 °C, preferably 220 to 240 °C, and more preferably 230 °C. When the step (a) is performed at less than 180 °C, the first copolymer is partially melted, and thus extrusion moldability and dispersibility of the conductive filler may be degraded, and when the step (a) is performed at greater than 300 °C, the first copolymer may be arbitrarily pyrolyzed or modified.

In addition, in the step (a), the conductive filler and the first copolymer may be extruded at a rate of 10 to 500 kg/hr, preferably, 10 to 30 kg/hr. When the extrusion is performed at a rate of less than 10 kg/hr, productivity may be degraded, and when the extrusion is performed at a rate of greater than 500 kg/hr, the mixing uniformity of the conductive filler and the first copolymer may be degraded.

The masterbatch, which is a product of the step (a), may include a predetermined amount of the conductive filler. For example, the masterbatch may include the conductive filler in an amount of 1 to 20 wt%.

When the conductive filler is carbon nanotubes, the carbon nanotubes are pellet-type carbon nanotubes processed by mechanically and physically pressing powder carbon nanotubes, and carbon nanotubes after the processing may have an apparent density of 0.01 to 0.2 g/ml, preferably, 0.05 to 0.2 g/ml. When the apparent density of carbon nanotubes is out of the above range, it is difficult to prepare a concentrated masterbatch including 10 wt% or more of carbon nanotubes. Also, the pellet-type carbon nanotubes may prevent powder from being scattered during the processing to improve a working environment.

Meanwhile, an extruder used in the extrusion of the step (a) may be a single screw extruder having one screw or a multi screw extruder having a plurality of screws, and preferably is a twin screw extruder having two screws for uniformly mixing and extruding the components.

In this case, in order to prevent the conductive filler from being damaged in the mixing process using the extruder, a method in which the first copolymer is added through the side of an extruder, preferably, a twin screw extruder, the conductive filler is supplied to the extruder using a side feeder, and then a melt mixing process is performed may be used.

In the step (b), the conductive filler included in the masterbatch may be mixed with a second copolymer, a third copolymer, and a rubber component to let down the content of the conductive filler. The second copolymer, the third copolymer, and the rubber component to be added in the step (b) may be used in a sufficient amount to let down the content of the conductive filler in the conductive resin composition which is a product to 1 to 10 wt%.

In the step (b), the masterbatch may be mixed with a second copolymer, a third copolymer, and a rubber component through a melt compounding method, an in situ polymerization method, a solution mixing method, or the like, preferably, through a melt compounding method which is capable of uniformly dispersing a conductive filler in a resin under high temperature or high shearing force using an extruder or the like, and thus can increase capacity and reduce manufacturing costs. The descriptions of types, characteristics, and selection criterion of the extruder are the same as those provided above.

As such, the conductive resin composition prepared through the steps (a) and (b) may harmoniously realize conductivity and mechanical properties compared to a conductive resin composition prepared through a conventional method, that is, prepared without preparing a masterbatch, and may minimize a conductivity variation caused by elongation so that a predetermined level of conductivity may be realized throughout a final product regardless of the form and structure of the product, resulting in a product with enhanced reliability and reproducibility. Also, a sloughing phenomenon in which unnecessary dust remains on the surface of the final product due to arbitrary desorption of the conductive filler may be reduced.

Meanwhile, a metal salt and a silicone oil may be further mixed in the step (a), and stearamide may be further mixed in the step (b). The descriptions of effects, contents, and usable types of the metal salt, the silicone oil, and the stearamide are the same as those provided above.

Hereinafter, embodiments of the present invention will be described in detail.

### Examples and Comparative Examples

10 parts by weight of multi-walled carbon nanotubes (MWCNTs or CNTs) was put into a side feeder of a twin screw extruder, and 76 parts by weight of a first styrene-butadiene copolymer (HIPS 1), 8 parts by weight of zinc stearate, and 6 parts by weight of dimethyl silicone oil were put into a main hopper at a rate of 25 kg/hr, and then a melt mixing process was performed at 200 rpm and 230 °C to prepare a masterbatch.

The masterbatch, a second styrene-butadiene copolymer (HIPS 2), a third styrene-butadiene copolymer (HIPS 3), a rubber component (styrene-butadiene-styrene rubber and/or styrene-ethylene-butadiene-styrene rubber), and stearamide were added at a ratio listed in the following Table 1 to the twin screw extruder, and then a melt mixing process was performed at 200 rpm and 250 °C to prepare a conductive resin composition. Afterward, a sheet-type specimen for measuring properties was prepared using an injection machine. Also, the specifications of raw materials including the HIPS 1 to HIPS 3 is shown in the following Table 2.

**[Table 1]**

| Component | CMB | HIPS 2 | HIPS 3 | SEBS | SBS | Additive |
|---|---|---|---|---|---|---|
| Example 1 | 31.25 | 40.75 | 20 | 5 | - | 3 |
| Example 2 | 31.25 | 39.75 | 20 | 6 | - | 3 |
| Example 3 | 31.25 | 44.75 | 15 | 6 | - | 3 |
| Example 4 | 31.25 | 43.75 | 15 | 7 | - | 3 |
| Example 5 | 31.25 | 47.75 | 10 | 8 | - | 3 |
| Example 6 | 31.25 | 44.75 | 13 | 8 | - | 3 |
| Example 7 | 31.25 | 42.75 | 15 | 8 | - | 3 |
| Example 8 | 31.25 | 38.75 | 17 | 10 | - | 3 |
| Comparative Example 1 | 31.25 | 65.75 | - | - | - | 3 |
| Comparative Example 2 | 31.25 | 59.75 | - | - | 6 | 3 |
| Comparative Example 3 | 31.25 | 55.75 | - | - | 10 | 3 |
| Comparative Example 4 | 31.25 | 51.75 | - | - | 14 | 3 |
| Comparative Example 5 | 31.25 | 49.75 | 10 | - | 6 | 3 |
| Comparative Example 6 | 31.25 | 54.75 | - | 7 | 4 | 3 |
| Comparative Example 7 | 31.25 | 54.75 | - | 5 | 6 | 3 |
| Comparative Example 8 | 31.25 | 44.75 | 17 | 4 | - | 3 |
| Comparative Example 9 | 31.25 | 44.75 | 10 | 11 | - | 3 |
| -CMB: Masterbatch | | | | | | |
| -SEBS: Styrene-ethylene-butadiene-styrene rubber | | | | | | |
| -SBS: Styrene-butadiene-styrene rubber | | | | | | |
| -Additive: Stearamide | | | | | | |

(units: wt%)

**[Table 2]**

| Classification | HIPS 1 | HIPS 2 | HIPS 3 |
|---|---|---|---|
| Main resin | Styrene-butadiene copolymer | Styrene-butadiene copolymer | Styrene-butadiene copolymer |
| Average particle size (µm) | 3 to 4 | 0.5 to 1.0 | - |
| Rubber (wt%) | 8.3 | 8.0 | 30 |
| Mineral oil (wt%) | 4.3 | 1.0 | - |
| Tensile strength (kgf/cm², 6 mm) | 260 | 370 | 133.58 |
| Elongation rate (%, 6 mm) | 40 | 55 | 180 |
| Impact strength (kg•cm/cm, 3.2 mm) | 9 | 12 | No break |
| Melt index (g/10 min, 200 °C, 5 kg) | 9 | 4 | 9 |
| Flexural strength (kgf/cm², 2.8 mm) | 300 | 500 | 189.67 |
| Light transmittance (%) | - | - | 89 |

### Experimental Examples: Measurement of properties of conductive resin composition

The mechanical, physical, and electrical properties of each of the sheet-type specimens according to Examples and Comparative Examples were measured, and results thereof are shown in the following Table 3.

**[Table 3]**

| Component | Impact strength (kg•cm/cm, 3.2 mm) | Surface resistance (Ω/sq, log) | Elongation rate (%, 6 mm) | Protrusion size | Notes |
|---|---|---|---|---|---|
| Example 1 | 16.1 | 5.5 | 62 | No protrusion | - |
| Example 2 | 15.6 | 5.6 | 60 | No pro trusion | - |
| Example 3 | 11.7 | 5.8 | 61 | No pro trusion | - |
| Example 4 | 15.1 | 5.8 | 66 | No pro trusion | - |
| Example 5 | 12.1 | 5.7 | 60 | No protrusion | - |
| Example 6 | 14.6 | 5.8 | 70 | No pro trusion | - |
| Example 7 | 17.1 | 5.8 | 64 | No pro trusion | - |
| Example 8 | 15.5 | 5.6 | 63 | No pro trusion | - |
| Comparative Example 1 | 7 | 5.5 | 52% | Small protrusion | - |
| Comparative Example 2 | 13.8 | 5.6 | 57% | Small protrusion | - |
| Comparative Example 3 | 17.1 | 5.8 | 59% | Large protrusion | Poor extrusion |
| Comparative Example 4 | - | - | - | Large protrusion | Extrusion is not possible |
| Comparative Example 5 | 17.5 | 6.1 | 52% | Small protrusion | Conductivity variation occurs. |
| Comparative Example 6 | 15.0 | 5.5 | 54% | Small protrusion | - |
| Comparative Example 7 | 17.3 | 5.7 | 58% | Small protrusion | - |
| Comparative Example 8 | 14.9 | 5.6 | 57% | Small protrusion | Poor extrusion |
| Comparative Example 9 | 17.2 | 5.8 | 53% | Small protrusion | Poor extrusion |

Referring to Table 3, small or large protrusions were observed on the surfaces of the specimens according to Comparative Examples 1 to 9. The protrusions observed on the specimen surfaces are generated by desorbing carbon nanotubes which are a conductive filler and thus staining the specimen surface with carbon nanotubes thus desorbed (sloughing phenomenon), and cause unnecessary dust in the production process of products produced using the sheet, such as semiconductors, LCDs, and automotive electric and electronic parts, and the dust causes the occurrence of a product defect. On the other hand, no protrusion was observed on the surfaces of the specimens according to Examples 1 to 8 which were prepared from a conductive resin composition including carbon nanotubes, three types of HIPS, and SEBS, which allows a product to be smoothly produced, and may significantly improve reliability and reproducibility of the product thus produced.

In particular, when the specimens according to Example 3 and Comparative Example 5 are compared in terms of properties, the specimen according to Comparative Example 5, in which SBS was used as a rubber component, did not exhibit uniform conductivity on the surface thereof due to the sloughing phenomenon, whereas the specimen according to Example 3, in which SEBS was used as a rubber component, exhibited uniform conductivity on the surface thereof because the sloughing phenomenon did not occur and a relatively high elongation rate of 61%.

Meanwhile, the specimens according to Examples 1 to 8 exhibited a high elongation rate of 60% or more compared to Comparative Examples 1 to 9, indicating that they are expected to be relatively easily applied to products, parts, and the like, which need to be elaborately shaped.

A conductive resin composition according to an embodiment of the present invention includes a thermoplastic polymer resin, a conductive filler, and a rubber component, and the thermoplastic polymer resin includes three types of copolymers, so that the conductive resin composition can be molded into a product in which a sloughing phenomenon caused by desorption of a conductive filler is minimized while maintaining mechanical properties.

In addition, a molded product manufactured from the conductive resin composition exhibits uniform conductivity throughout the entire surface, so that an application area thereof can be expanded to products, parts, and the like, which need to be elaborately shaped in addition to general products.

Effects of the present invention are not limited to the above-described effects and it should be understood that all effects that can be inferred from a configuration of the invention disclosed in the detailed descriptions or claims of the present invention are encompassed.

The above description of the present invention is only exemplary, and it will be understood by those skilled in the art that various modifications can be made without departing from the scope of the present invention and changing essential features. Therefore, the above-described embodiments should be considered as only illustrative in all aspects and not for purposes of limitation. For example, each component described as a single type may be realized in a distributed manner, and similarly, components that are described as being distributed may be realized in a coupled manner.

The scope of the present invention is defined by the appended claims and encompasses all modifications and alterations derived from meanings, the scope and equivalents of the appended claims.

## Claims

1. A conductive resin composition comprising:
10 to 40 wt% of a first copolymer having an average particle size of 1 to 5 µm;
30 to 60 wt% of a second copolymer having an average particle size of 0.1 to 1 µm;
10 to 20 wt% of a third copolymer prepared by copolymerizing styrene and butadiene in a weight ratio of 60 to 80 : 20 to 40;
1 to 10 wt% of a conductive filler; and
5 to 10 wt% of a rubber component.

2. The conductive resin composition of claim 1, wherein the first copolymer and the second copolymer are styrene-butadiene rubber.

3. The conductive resin composition of claim 1, wherein the conductive filler is selected from the group consisting of carbon nanotubes, fullerene, graphene, graphite, carbon fiber, carbon black, and a mixture of two or more thereof.

4. The conductive resin composition of claim 1, wherein the rubber component is styrene-ethylene-butadiene-styrene rubber.

5. The conductive resin composition of claim 1, further comprising a metal salt and stearamide.

6. The conductive resin composition of claim 5, wherein the metal salt is selected from the group consisting of calcium stearate, barium stearate, lead stearate, magnesium stearate, zinc stearate, and a mixture of two or more thereof.

7. The conductive resin composition of claim 5, wherein the metal salt and the stearamide each are included in an amount of 1 to 5 wt% with respect to the total weight of the conductive resin composition.

8. The conductive resin composition of claim 1, further comprising a silicone oil.

9. The conductive resin composition of claim 8, wherein the silicone oil is selected from the group consisting of dimethyl silicone oil, methyl hydrogen silicone oil, ester-modified silicone oil, hydroxy silicone oil, carbinol-modified silicone oil, vinyl silicone oil, silicone acrylate, and a mixture of two or more thereof.

10. The conductive resin composition of claim 8, wherein the silicone oil is included in an amount of 0.5 to 5 wt% with respect to the total weight of the conductive resin composition.

11. A molded product made of the conductive resin composition of any one of claims 1 to 10.

12. The molded product of claim 11, which has an elongation rate of 60% or more.

13. A method of preparing a conductive resin composition, comprising:
(a) mixing a first copolymer having an average particle size of 1 to 5 µm and a conductive filler to prepare a masterbatch; and
(b) mixing the masterbatch with a second copolymer having an average particle size of 0.1 to 1 µm, a third copolymer prepared by copolymerizing styrene and butadiene in a weight ratio of 60 to 80 : 20 to 40, and a rubber component.

14. The method of claim 13, wherein a metal salt and a silicone oil are further mixed in the step (a).

15. The method of claim 13, wherein stearamide is further mixed in the step (b).
